# FASCICULE DE BREVET EUROPEEN

(11) **EP 0 853 797 B1**
(45) Date de publication et mention de la délivrance du brevet: **22.12.1999**
(21) Numéro de dépôt: 96931847.6
(22) Date de dépôt: 16.09.1996
(51) Int. Cl.: G06K 19/06

(54) **PROCEDE DE CODIFICATION D'INFORMATIONS SUR UN ARTICLE**
VERFAHREN ZUM KODIEREN VON INFORMATIONEN AUF EINEM ARTIKEL
METHOD FOR ENCODING DATA ON AN ARTICLE

(30) Priorité: 03.10.1995 FR 9511839
(43) Date de publication de la demande: 22.07.1998
(73) Titulaire: Landata-Cobiporc, 35590 Saint-Gilles (FR)
(72) Inventeur: LANDREVIE, Jacques, F-73130 La Chambre (FR)
(74) Mandataire: Branger, Jean-Yves
(86) Numéro de dépôt international: FR9601429
(87) Numéro de publication internationale: WO9713216

(56) Documents cités:
- EP-A- 0 388 204
- EP-A- 0 547 858
- WO-A-86/05906
- FR-A- 1 262 331
- FR-A- 2 608 294
- US-A- 3 963 901

## Description

La présente invention se rapporte à un procédé de codification d'informations sur un article, et de lecture de ces informations.

Le procédé de codification d'informations le plus répandu est celui bien connu sous le nom de "code à barres". On le rencontre dans pratiquement tous les types d'industries où il trouve de nombreuses applications. En effet, un tel système permet aussi bien d'indiquer un pnx que de gérer un stock de produits.

Toutefois, ce type de codification ne convient pas pour identifier des produits qui doivent subir un certain nombre d'opérations se traduisant par une détérioration, ou du moins, un changement d'aspect de leur surface recevant les moyens de codification. C'est notamment le cas de produits subissant des cycles de traitement sévères, notamment chimiques ou thermiques. A titre d'exemple, on peut citer les cuirs et peaux, ainsi que les lingots de métaux en cours de fabrication.

Les systèmes de codification imprimés ou gravés ne conviennent pas non plus car ils sont très vite souillés au cours des traitements et donc illisibles de manière automatique. Quant aux systèmes électroniques (transpondeurs, puces...), ils sont trop fragiles et onéreux.

On connaît aussi une technique de codage par trous destinée au suivi de circuits imprimés. Le code se présente sous la forme de deux lignes parallèles de trous disposées de chaque côté de la carte portant le circuit. Les lignes codées sont complémentaires. Un tel système est fastidieux à mettre en oeuvre car il nécessite une "double écriture" des trous. Par ailleurs, il est difficilement adaptable sur un article présentant une forme variable ou aléatoire.

Le document FR-A- 2 608 294 décrit un système de marquage et d'identification automatiques. On y divulgue une technique qui consiste à:
- former une matrice comportant m lignes et n colonnes ;
- marquer d'un signe certaines cases, toute case marquée valant pour un, tandis que chaque case non marquée vaut pour zéro ;
- pour chaque colonne, affecter aux cases successives valant pour un, les valeurs des puissances entières croissantes de deux ;
- toujours pour chaque colonne, additionner les valeurs de toutes les cases marquées ;
- pour chaque nombre qui correspond à la somme d'une colonne, le multiplier par les valeurs croissantes des puissances entières de la base de numérotation de la matnce.

Cette base est définie comme le nombre de colonnes nécessaires pour définir dans ces colonnes toutes les valeurs possibles de cases marquées de lignes.

Cette technique est relativement compliquée puisqu'elle nécessite de devoir gérer chaque colonne indépendamment de l'autre, et de changer de base de numérotation pour chaque type de matrice.

Le document WO-A- 86/05 906 se rapporte à une bande comportant des données impnmées, comprenant des informations à codage binaire. Les informations y sont codées sous la forme de "dibits" constitués de cases blanches et cases noires.

La présente invention vise à pallier les inconvénients énumérés ci-dessus.

En d'autres termes, elle vise à fournir un procédé de codification d'informations qui soit simple, lisible même sur des articles transformés et/ou souillés, et qui soit difficilement falsifiable.

Il s'agit donc d'un procédé de codification d'informations sur un article, et de lecture de ces informations qui sont directement liées à au moins une caracténstiquc de l'article.

Il consiste à :
- répartir sur l'article ou sur une étiquette portée par l'article et selon une matrice bidimensionnelle formée d'un nombre pair au moins égal à deux de lignes verticales associées deux à deux et d'un nombre quelconque au moins égal à deux de lignes horizontales, des repères à l'intersection de certaines lignes verticales et horizontales, le nombre de repères étant égal à la moitié du nombre total d'intersections, la présence d'un repère à l'intersection d'une ligne verticale et d'une ligne horizontale étant associée à une absence de repère - ou vide - à l'intersection de la même ligne horizontale et de la ligne verticale associée, la valeur élémentaire 1 étant attribuée à chaque couple - ou "bit" - formé d'un repère et du vide associé disposés dans un ordre déterminé, tandis que la valeur élémentaire 0 est attribuée à chaque "bit" formé d'un repère et du vide associé disposés dans l'ordre inverse ;
- un sens et un ordre de lecture des "bits" de la matnce ayant été prédéterminés, attribuer au premier "bit" le numéro 1 s'il a la valeur 1, ou 0 s'il a la valeur 0, au deuxième "bit" le numéro 2 s'il a la valeur 1, ou 0 s'il a la valeur 0 , au n^{ième} "bit" le chiffre 2ⁿ⁻¹ s'il a la valeur 1, ou 0 s'il a la valeur 0, et ceci pour l'ensemble des "bits" de la matrice ;
- additionner l'ensemble des numéros de manière à former un nombre, dit "code", dont la valeur est associée à au moins une caracténstiquc de l'article.

Ainsi, pour un type de matrice donnée dont le nombre de lignes verticales et horizontales sont déterminés, il existe toujours le même nombre de repères. Si l'un d'entre eux vient à être falsifié, il faut obligatoirement le remplacer par un repère additionnel, ce qui modifie obligatoirement le code.

Par ailleurs, selon d'autres caractéristiques avantageuses mais non limitatives de ce procédé :
- un certain nombre de couples repères / vides sont prévus, n'intervenant pas dans la formation du code numérique, dont le rôle est de permettre la détection du positionnement de la matrice ;
- le nombre de repères est au moins égal à trois et ils sont répartis selon une configuration ne présentant ni axe ni centre de symétrie ;
- les repères consistent en des trous ;
- les trous traversent ledit article ;
- les repères consistent en des plages de matière ;
- les plages de matière présentent une couleur contrastée par rapport à celle de l'article;
- les plages de matière sont magnétiques, tandis que l'article ou l'étiquette est formé(e) d'un matériau amagnétique.

On notera que lorsque les repères consistent en des trous, ceux-ci sont difficiles à falsifier. En effet, il faut pour cela boucher un trou existant et en former un nouveau. Or la matière de l'article est appelée à subir des traitements chimiques et/ou thermiques. Cette matière n'aura vraisemblablement pas les mêmes caractéristiques physiques au voisinage du nouveau trou et au voisinage de l'ancien trou. La falsification sera ainsi facile à repérer.

D'autres caractéristiques et avantages de l'invention apparaîtront à la lecture de la description qui va suivre de certains modes de réalisation.

Cette description sera faite en référence aux dessins annexés dans lesquels :
- les figures 1 et 2 sont des schémas destinés à montrer comment s'opère la codification d'informations au moyen du procédé conforme à l'invention ;
- la figure 3 est une vue schématique en perspective d'un lingot d'acier sur lequel est fixé une étiquette portant un code ;
- la figure 4 est un schéma visant à montrer que lorsque les repères sont constitués de trous, le code est conservé lorsque l'on tranche le produit dans le sens de l'épaisseur ;
- la figure 5 est un schéma illustrant des moyens de lecture d'un code apposé sur un lingot d'acier.

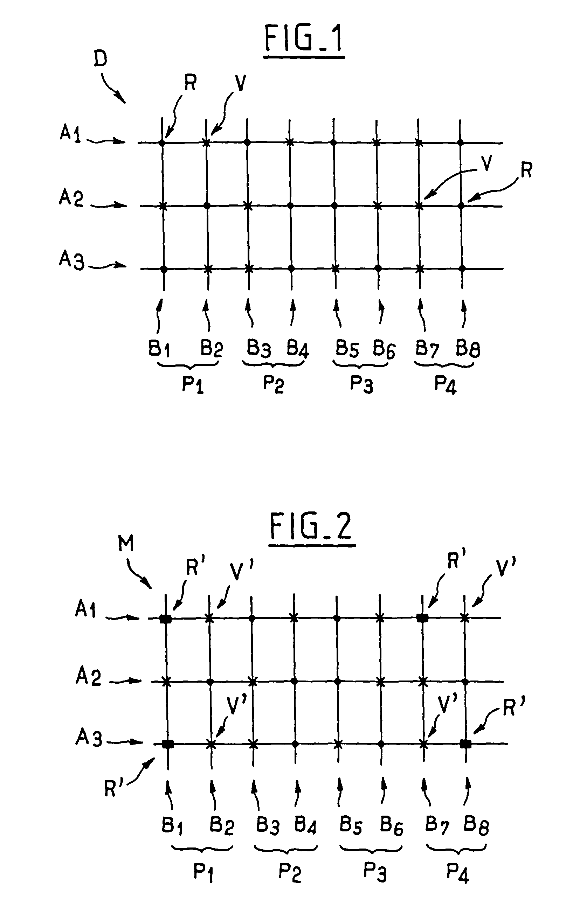

En référence à la figure 1, la première étape du procédé conforme à l'invention consiste à répartir sur un article ou sur une étiquette portée par l'article et selon une matrice bidimensionnelle formée d'un nombre pair de lignes verticales associées deux à deux et d'un nombre quelconque de lignes horizontales, des repères à l'intersection de certaines lignes verticales et horizontales.

On notera que les lignes de la matrice sont simplement destinées à faciliter le repérage des repères. Toutefois, ces lignes ne sont pas forcément visibles sur l'article ou l'étiquette.

L'article en question peut être de toute nature. Il s'agit par exemple de cuirs et peaux subissant un traitement de tannage ou de lingots de métal, par exemple d'acier, en cours de fabrication.

Dans l'exemple de la figure 1, la matrice **D** comporte huit lignes verticales dénommées **B**_{**1**} à **B**_{**8**}, ainsi que trois lignes horizontales dénommées **A**_{**1**} à **A**_{**3**}, Les lignes verticales sont associées deux à deux pour former quatre paires appelées **P**_{**1**} à **P**_{**4**}. On a donc ainsi défini une matrice **D** formée de huit lignes verticales et de trois lignes horizontales.

Les repères **R** répartis sur la matrice sont constitués par exemple par des trous ou par des petites plages de matière. Il s'agit par exemple de plages de matière présentant une couleur contrastée par rapport à celle de l'article ou de l'étiquette ou de plages de matière magnétique, l'article ou l'étiquette étant alors formé d'un matériau amagnétique.

Sur la figure, les repères **R** sont représentés par de petits ronds noirs et leur nombre est égal à la moitié du nombre total d'intersections des lignes verticales et horizontales. Dans le cas présent, ce nombre est égal à 12 (8 x 3 / 2).

La présence d'un repère **R** à l'intersection d'une ligne verticale et d'une ligne horizontale est obligatoirement associée à une absence de repère - ou vide **V** - à l'intersection de la même ligne et de la ligne verticale associée. A titre d'exemple à l'intersection des lignes **A**_{**1**} et **B**_{**1**} on trouve un repère **R**, tandis qu'à l'intersection des lignes **A**_{**1**} et **B**_{**2**} on trouve un vide **V**.

De manière conventionnelle, on utilise les termes "vertical(es)" et "horizontal(es)" pour identifier l'orientation particulière des lignes de la matrice représentée aux figures annexées. Il va de soi qu'on peut réaliser également une matrice en utilisant un nombre pair de lignes horizontales, un nombre quelconque de lignes verticales, et en plaçant les repères et vides associés, non pas horizontalement mais verticalement.

Toujours selon cette première étape du procédé, la valeur élémentaire 1 est attribuée à chaque couple - ou "bit" - formé d'un repère **R** et du vide associé, ce repère et ce vide étant disposés dans un ordre déterminé, tandis que la valeur élémentaire 0 est attribuée à chaque "bit" formé d'un repère **R** et du vide **V** associé disposés dans l'ordre inverse.

Ainsi, à titre d'exemple, le "bit" repéré par les références **R** (à gauche) et **V** (à droite) en partie supérieure de la matrice de la figure 1 est associé à la valeur élémentaire 1, tandis que la valeur 0 est associée au second "bit" repéré sur cette figure.

Dans une seconde étape, on détermine un sens et un ordre de lecture des "bits" de la matrice. Il peut s'agir du sens normal de lecture, c'est-à-dire de gauche à droite et de haut en bas. Toutefois, une lecture dans le sens inverse, ou dans un sens différent prédéterminé, peut être envisagée. Par exemple, ce sens peut changer à chaque lecture des "bits", dans la mesure où cela est décidé par l'utilisateur.

Pour faciliter le sens correct de lecture, il peut être prévu au voisinage de la matrice D des signes permettant le repérage de son positionnement.

Une fois ce sens et cet ordre de lecture des lignes de la matrice prédéterminés, on attribue au premier "bit" le numéro 1 s'il a la valeur élémentaire 1, ou 0 s'il a la valeur 0. De la même manière, au deuxième "bit" on attribue le numéro 2 s'il a la valeur 1 ou 0 s'il a la valeur 0. On attribue au n^{ième} "bit" le chiffre 2ⁿ⁻¹ s'il a la valeur 1, ou 0 s'il a la valeur 0.

A titre d'exemple et seulement pour les "bits" de la première ligne **A**_{**1**} de la matrice **D** de la figure 1, on donne ci-dessous leur valeur élémentaire respective, ainsi que le numéro qui leur est attribué :
- premier "bit" : valeur 1; numéro 1;
- deuxième "bit" : valeur 1 ; numéro 2 ;
- troisième "bit" : valeur 1 ; numéro 4 ;
- quatrième "bit" : valeur 0 ; numéro 0.

Enfin, on additionne l'ensemble des numéros de la matrice de manière à former un nombre dit "code" dont la valeur est associée à au moins une caractéristique de l'article.

Toujours en référence à la figure 1, le code attribué à la matrice est le suivant: trois cent vingt sept, qui se décompose de la manière suivante : 1 + 2 + 4 + 0 + 0 + 0 + 64 + 0 + 256 + 0 + 0.

Cette valeur trois cent vingt sept est associée à au moins une caractéristique de l'article. A titre d'exemple, s'il s'agit d'un lingot d'acier, la valeur de code trois cent vingt sept peut être associée à l'information selon laquelle ce lingot a été fabriqué dans une usine à Rennes.

Selon la position des repères et des vides associés, le code change. Ainsi pour une matnce comportant douze "bits", il existe 2¹² valeurs possibles pour le code, soit 4 096 valeurs.

La matrice représentée à la figure 2 se distingue de celle de la figure 1 par le fait qu'elle comporte, intégrés en son sein, un certain nombre de couples de repères **R** / vides **V** qui sont seulement prévus pour permettre la détection du positionnement de la matrice.

Ces couples sont repérés à la figure 2 par les références **R'** et **V'**. Chaque repère R' est représenté sous la forme d'un petit carré noirci.

Pour permettre le repérage de la matrice, ces repères **R'** sont répartis selon une configuration qui ne présente ni axe de symétrie ni centre de symétrie. De cette façon on est assuré de retrouver le bon sens permettant une lecture correcte des "bits". Ils sont répartis de préférence sur les bords de la matrice.

Le nombre de repères **R'** permettant la détection du positionnement de la matrice est au moins égal à trois, mais peut être bien entendu bien supérieur.

Ces "bits" particuliers ne servent qu'au positionnement de la matrice et n'interviennent pas dans la formation du code numérique.

Ainsi, le code numérique attribué à la matrice de la figure 2 est dix neuf, qui se décompose de la manière suivante : 1 + 2 + 0 + 0 + 16 + 0 + 0 + 0. Dans cette matrice, il existe 2⁸ valeurs possibles pour le code, soit 256.

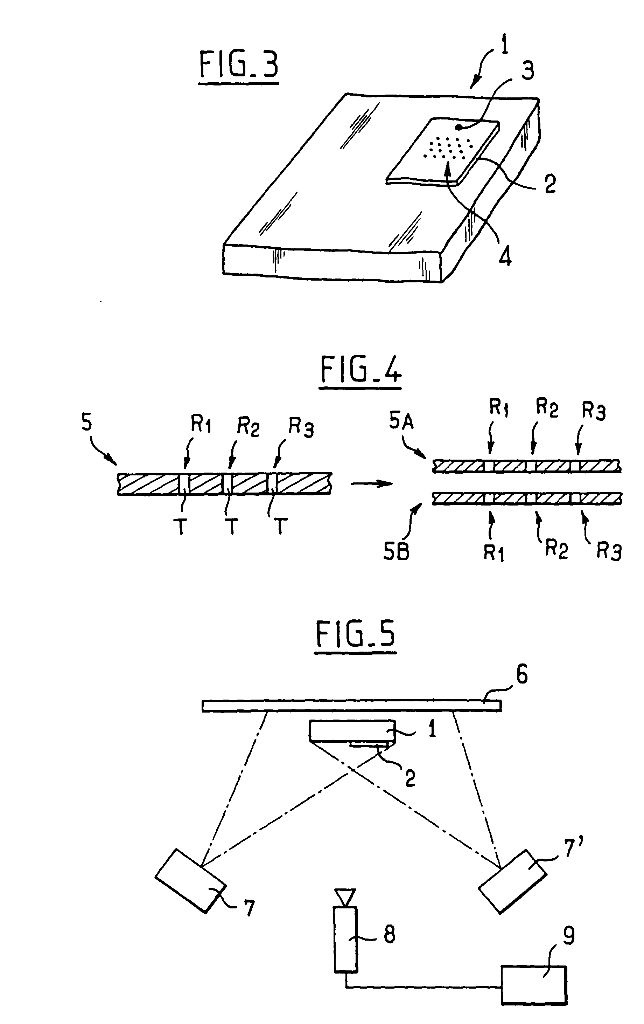

On a représenté à la figure 3 et de manière schématique un lingot d'acier 1 qui porte sur l'une de ses faces une étiquette 2 qui y est fixée à l'aide d'un poinçon 3. Cette étiquette porte un code 4 caractéristique du produit.

Selon une forme de réalisation non représentée, les repères **R** peuvent consister en des plages de matière, c'est-à-dire de petites surfaces d'un matériau différent de celui qui constitue l'article ou l'étiquette. Ces plages de matière peuvent présenter une couleur contrastée par rapport à celle de l'article ou être de nature magnétique, tandis que l'article ou l'étiquette est formée d'un matériau amagnétique.

Dans la vanante de réalisation de la figure 4, le matériau 5 comporte une série de repères **R**_{**1**}**, R**_{**2**}**, R**_{**3**} qui consistent chacun en un trou **T**. Ce trou traverse l'épaisseur du matériau de sorte, comme le montre la partie droite de la figure, même si le matériau vient à être sectionné dans le sens de son épaisseur en deux parties **5A** et **5B**, on retrouve un code identique sur chacune de ces deux parties.

Cela rend possible la mise en place du code sur l'article préalablement au traitements chimiques et/ou physiques qu'il va subir. Lorsque ces traitements sont effectués, on peut alors sectionner l'article en plusieurs parties, dans le sens de son épaisseur, tout en retrouvant sur chacune de ces parties le code initial.

Cela est particulièrement adapté à des produits tels que des cuirs, des peaux ou du bois.

Par ailleurs, on notera, du fait que les repères consistent en des trous, que la falsification du code devient très difficile à effectuer car il faut boucher un ou plusieurs trous du code et refaire un nombre de trous identiques en d'autres endroits, afin de générer un autre code. Le bouchage d'un trou sera facile à déceler du fait qu'on y aura rajouté de la matière. De plus, le trou refait aura difficilement le même aspect que les trous d'origine, car la matière qui entoure ces derniers aura subi des transformations physiques et/ou chimiques qui seront très difficiles à imiter au voisinage du ou des trou(s) falsifié(s).

La figure 5 représente de façon très schématique des moyens de lecture du code apposé sur un article.

Bien entendu, en fonction de la nature des repères **R**, ces moyens de lecture seront de nature différente. A titre d'exemple si les repères **R** consistent en des trous ou en des plages de matière de couleur contrastée par rapport à celle de l'article ou de l'étiquette, les moyens de lecture consistent par exemple en des moyens de lecture naturelle ou de vision artificielle. S'il s'agit de plages de matière magnétique, les moyens de lecture seront de type magnétique.

Des exemples particuliers de ces moyens de lecture seront brièvement décrits ci-dessous, car ces moyens ne font pas partie, à proprement parler, de l'invention.

Les moyens représentés à la figure 5 comprennent un fond noir 6 contre lequel un lingot d'acier revêtu d'une étiquette 2 portant un code sous la forme de trous est placée. L'installation comprend également deux spots lumineux 7 et 7', une caméra de lecture 8 couplée à un ordinateur 9.

La méthode de lecture du code consiste à réaliser l'acquisition de deux images correspondant à deux conditions d'éclairage successives, c'est-à-dire uniquement avec la source d'éclairage 7, puis uniquement avec la source d'éclairage 7'.

Grâce à cette double acquisition de données, les trous sont visibles sur au moins une des deux images et ce pour toutes les orientations possibles de l'étiquette. La deuxième étape consiste à obtenir une image du lingot où tous les trous sont présents, par superposition des deux images obtenues précédemment.

Au besoin, l'image obtenue est traitée par ordinateur de manière à éliminer des éléments parasites différents du code qui viendraient perturber son interprétation.

Bien entendu, dans l'ordinateur 9 est chargé le programme permettant la lecture du code et son interprétation.

Un mode de lecture particulièrement adapté aux cuirs et peaux dans lesquels le code a été inscrit sous la forme de trous, consiste à éclairer l'article par l'arrière.

La lumière qui traverse les trous forme des "taches" dont la répartition est une image de celle des repères du code. C'est cette image qui est lue, par exemple au moyen d'une caméra couplée à un ordinateur.

Le matériel utilisé pour ce faire peut comprendre une sorte de table dont au moins une partie consiste en un hublot transparent. Sous le hublot est placée la caméra. Le cuir ou la peau est disposé sur la table de telle façon que le code soit situé au-dessus du hublot. Un équipement d'éclairage est disposé au-dessus de la table, qui dirige son flux lumineux en direction de l'article.

Ce mode de lecture a pour avantage de permettre l'interprétation du code, même quant les trous sont partiellement obturés notamment par des débris de matière, dans la mesure où la lumière filtre à travers ces trous.

## Revendications

1. Procédé de codification d'informations sur un article (1), et de lecture de ces informations qui sont directement liées à au moins une caractéristique de l'article, qui consiste à :
- répartir sur l'article ou sur une étiquette portée par l'article et selon une matrice bidimensionnelle formée d'un nombre (N) pair au moins égal à deux de lignes verticales associées deux à deux et d'un nombre quelconque (M) au moins égal à deux de lignes horizontales, des repères (R) à l'intersection de certaines lignes verticales et horizontales, le nombre de repères (R) étant égal à la moitié du nombre total d'intersections (M x N / 2), la présence d'un repère à l'intersection d'une ligne verticale et d'une ligne horizontale étant associée à une absence de repère - ou vide (V) - à l'intersection de la même ligne horizontale et de la ligne verticale associées la valeur élémentaire 1 étant attribuée à chaque couple - ou "bit" - formé d'un repère (R) et du vide (V) associé disposés dans un ordre déterminé tandis que la valeur élémentaire 0 est attribuée à chaque "bit" formé d'un repère (R) et du vide (V) associé disposés dans l'ordre inverse ;
- un sens et un ordre de lecture des "bits" de la matrice ayant été prédéterminés, attribuer au premier "bit" le numéros 1 s'il a la valeur 1, ou 0 s'il a la valeur 0, au deuxième "bit" le numéro 2 s'il a la valeur 1, ou 0 s'il a la valeur 0, au n^{ième} "bit" le chiffre 2ⁿ⁻¹ s'il a la valeur 1, ou 0 s'il a la valeur 0, et ceci pour l'ensemble des "bits" de la matrice ;
- additionner l'ensemble des numéros de manière à former un nombre, dit "code", dont la valeur est associée à au moins une caractéristique de l'article.

2. Procédé selon la revendication 1, caractérisé en ce qu'un certain nombre **x** de couples repères (R') / vides (V') sont prévus, n'intervenant pas dans la formation du code numérique, dont le rôle est de permettre la détection du positionnement de la matnce.

3. Procédé selon la revendication 2, caractérisé en ce que le nombre **x** de repères (R') est au moins égal à trois et en ce qu'ils sont répartis selon une configuration ne présentant ni axe ni centre de symétrie.

4. Procédé selon l'une des revendications 1 à 3, caractérisé en ce que les repères (R, R') consistent en des trous (T).

5. Procédé selon la revendication 4, caractérisé en ce que les trous (T) traversent ledit article (1).

6. Procédé selon l'une des revendications 1 à 3, caractérisé en ce que les repères (R, R') consistent en des plages de matière.

7. Procédé selon la revendication 6, caractérisé en ce que les plages de matière (R, R') présentent une couleur contrastée par rapport à celle de l'article.

8. Procédé selon la revendication 6, caractérisé en ce que les plages de matière (R, R') sont magnétiques, tandis que l'article (1) ou l'étiquette est formé(e) d'un matériau amagnétique.

## Patentansprüche

1. Verfahren zum Kodieren von Informationen auf einem Artikel (1) und zum Lesen dieser Informationen, welche direkt mit wenigstens einer Eigenschaft des Artikels verbunden sind, welches daraus besteht:
- auf dem Artikel oder auf einem von dem Artikel getragenen Etikett gemäß einer zweidimensionalen Matrix, welche von einer geraden Zahl (N), welche wenigstens gleich zwei paarweise zugeordneten vertikalen Linien ist, und von irgendeiner Zahl (M), welche wenigstens gleich zwei horizontalen Linien ist, gebildet ist, Markierungen (R) an dem Schnittpunkt bestimmter vertikaler und horizontaler Linien zu verteilen, wobei die Anzahl der Markierungen (R) gleich der Hälfte der Gesamtanzahl von Schnittpunkten (M x N/2) ist, wobei das Vorhandensein einer Markierung an dem Schnittpunkt einer vertikalen Linie und einer horizontalen Linie einer Markierungsabwesenheit - oder Leerstelle (V) - an dem Schnittpunkt derselben horizontalen Linie und der zugeordneten vertikalen Linie zugeordnet wird, wobei der Elementarwert 1 jedem Paar - oder "Bit" zugeordnet wird, welches von einer in einer bestimmten Reihenfolge angeordneten Markierung (R) und der zugeordneten Leerstelle (V) gebildet ist, während der Elementarwert 0 jedem "Bit" zugeordnet wird, welches von einer in der umgekehrten Reihenfolge angeordneten Markierung (R) und der zugeordneten Leerstelle gebildet ist;
- unter Vorbestimmung eines Lesesinns und einer Lesereihenfolge einem ersten "Bit" die Zahl 1, wenn es den Wert 1 hat, oder 0, wenn es den Wert 0 hat, dem zweiten,,Bit" die Zahl 2, wenn es den Wert 1 hat, oder 0, wenn es den Wert 0 hat, und dem nten,,Bit" die Ziffer 2ⁿ⁻¹, wenn es den Wert 1 hat, oder 0, wenn es den Wert 0 hat, zuzuordnen, und dies für die Gesamtheit der "Bits" der Matrix;
- die Gesamtheit von Zahlen derart zu addieren, daß eine Zahl gebildet wird, welche "Code" genannt wird, und deren Wert wenigstens einer Eigenschaft des Artikels zugeordnet wird.

2. Verfahren gemäß Anspruch 1, dadurch gekennzeichnet, daß eine bestimmte Anzahl **x** von Paaren aus Markierungen (R')/ Leerstellen (V') vorgesehen ist, welche nicht in die Bildung des numerischen Codes eingeht, und deren Rolle darin besteht, die Erfassung der Positionierung der Matrix zu ermöglichen.

3. Verfahren gemäß Anspruch 2, dadurch gekennzeichnet, daß die Anzahl **x** von Markierungen (R') wenigstens gleich drei ist, und daß sie gemäß einer Konfiguration verteilt sind, welche weder eine Achse noch einen Symmetriemittelpunkt aufweist.

4. Verfahren gemäß einem der Ansprüche 1 bis 3, dadurch gekennzeichnet, daß die Markierungen (R, R') aus Löchern (T) bestehen.

5. Verfahren gemäß Anspruch 4, dadurch gekennzeichnet, daß die Löcher (T) den Artikel (1) durchqueren.

6. Verfahren gemäß einem der Ansprüche 1 bis 3, dadurch gekennzeichnet, daß die Markierungen (R, R') aus Materialbereichen bestehen.

7. Verfahren gemäß Anspruch 6, dadurch gekennzeichnet, daß die Materialbereiche (R, R') eine Farbe aufweisen, welche bezüglich derjenigen des Artikels kontrastiert.

8. Verfahren gemäß Anspruch 6, dadurch gekennzeichnet, daß die Materialbereiche (R, R') magnetisch sind, während der Artikel (1) oder das Etikett aus einem nicht-magnetischen Material hergestellt ist.

## Claims

1. A method of encoding information on an article (1), and of reading said information, which information is directly associated with at least one characteristic of the article, the method consisting in:
· distributing on the article or on a label carried by the article a two-dimensional matrix comprising an even number (N) of not less than two vertical lines that are associated in pairs and an arbitrary number (M) of not less than two horizontal lines, marks (R) at the intersections of certain vertical lines and horizontal lines, the number of marks (R) being equal to half the total number of intersections (M × N/2), the presence of a mark at the intersection of a vertical line and a horizontal line being associated with the absence of a mark or gap (V) at the intersection of the same horizontal line and the vertical line associated therewith, the binary value 1 being allocated to each pair or "bit" formed by a mark (R) and an associated gap (V) disposed in a determined order, while binary value 0 is allocated to each "bit" formed by a mark (R) and the associated gap (V) disposed in the opposite order;
· a direction and an order for reading the "bits" of the matrix having been predetermined, allocating the quantity 1 to the first "bit" if it has the value 1 or 0 if it has the value 0, the quantity 2 to the second "bit" if it has the value 1, or 0 if it has the value 0, the quantity 2ⁿ⁻¹ to the n^{th} "bit" if it has the value 1, or 0 if it has the value 0, for all of the "bits" of the matrix; and
· adding up all of the quantities to form a number referred to as a "code", with the value of the number being associated with at least one characteristic of the article.

2. A method according to claim 1, characterized in that a certain number x of pairs of marks (R') and gaps (V') are provided that are not involved in forming the numerical code, the role thereof being to enable the positioning of the matrix to be detected.

3. A method according to claim 2, characterized in that the number x of marks (R') is not less than three and in that they are distributed in a configuration that does not have an axis or a center of symmetry.

4. A method according to any one of claims 1 to 3, characterized in that the marks (R, R') are constituted by holes (T).

5. A method according to claim 4, characterized in that the holes (T) pass through said article (1).

6. A method according to any one of claims 1 to 3, characterized in that the marks (R, R') are constituted by areas of material.

7. A method according to claim 6, characterized in that the areas of material (R, R') are of a color that contrasts with the color of the article.

8. A method according to claim 6, characterized in that the areas of material (R, R') are magnetic, while the article (1) or the label is formed of a material that is non-magnetic.
